# EUROPEAN PATENT APPLICATION

(11) **EP 2 209 256 A1**
(43) Date of publication of application: **21.07.2010**
(21) Application number: 09180451.8
(22) Date of filing: 22.12.2009
(51) Int. Cl.: H04L 12/18, H04M 3/56, H04W 4/02, H04M 3/42

(54) **Apparatus and mobile terminal**

(30) Priority: 14.01.2009 JP 2009005363
(71) Applicant: Fujitsu Limited, Kawasaki-shi, Kanagawa 211-8588 (JP)
(72) Inventor: Nishidoi, Takeshi, Kanagawa 211-8588 (JP); Shinozaki, Atsushi, Kanagawa 211-8588 (JP)
(74) Representative: Stebbing, Timothy Charles

(57) **Abstract**

A mobile communication system (100) includes a detecting unit (111) that detects whether or not a first mobile terminal (120) meets a predetermined requirement and a radio communication controller (112) that provides, when the detecting unit detects the first mobile terminal as meeting the predetermined requirement, a predetermined radio communications service to the first mobile terminal (120), wherein when the detecting unit (111) detects the first mobile terminal (120) as meeting the predetermined requirements, the radio communications controller (112) provides a predetermined radio communications service to a second mobile terminal (130) different from the first mobile terminal (120).

## Description

The present invention relates to a mobile communication system, a mobile communication method, a communication apparatus and a mobile terminal conducting radio communications.

Digital terrestrial broadcasting has recently started, and one segment of this broadcasting has also started specifically for mobile equipment such as mobile phones. Also with a Very High Frequency(VHF) band, broadcasting services have been at the planning stage for mobile equipment. As to digital broadcasting, broadcasting content services have become available not only for indoor viewing but also for outdoor viewing.

Also in the fields of mobile communications, thanks to higher speed circuits, upgrading is in progress to allow for the provisioning of broadcasting services, not only to limited indoor areas where cabling is available, but also to outdoor areas. As such, with the environment making full use of radio characteristics, the broadcasting services have become available to anyone at any time in any place. As exemplary content of distribution services, there is a technology of implementing a content distribution system that can create the same environment as that at home for program viewing while a user is on the road, i.e., in overnight accommodations such as hotels. An example includes Japanese laid open patent publication 2001-345766.

The concern here is that, with existing technology, the broadcasting services are indeed available to anyone at any time in any place, that is the provision of such services to users will be all alike. As a result, the services may lose their appeal to the users. As such, the previous technology has the difficult problem of stimulating the interests of the users through the provision of broadcasting services.

Accordingly, an aspect of the invention is to provide a service for stimulating the interests of users and/or for restricting access to particular content or services to specific users or groups of users.

According to a certain aspect of the invention, there is provided a mobile communication system including: a detecting unit that detects whether or not a first mobile terminal meets a predetermined requirement; and a radio communication controller that provides, when the detecting unit detects the first mobile terminal as meeting the predetermined requirement, a predetermined radio communications service to the first mobile terminal, wherein when the detecting unit detects the first mobile terminal as meeting the predetermined requirement, the radio communications controller provides a predetermined radio communications service to a second mobile terminal, the second mobile terminal being different from the first mobile terminal.

In certain embodiments, the radio communications service provided to the second mobile terminal are the same as the radio communications service provided to the first mobile terminal.

In certain embodiments, the second mobile terminal is correlated (associated or linked)with the first mobile terminal before the detecting unit detects the first mobile terminal as meeting the predetermined requirement.

In certain embodiments, the predetermined radio communications services provided to the first mobile terminal, or the radio communications service provided to the second mobile terminal are a distribution of information about still or moving image (video) content.

In certain embodiments, the radio communication controller provides the predetermined radio communications service to the first or second mobile terminal by transmitting key information to the first or second mobile terminal for use to decrypt information about still or moving image content encoded with an encryption process before broadcasting.

In certain embodiments, when the predetermined radio communications services with respect to the first mobile terminal are applied in a predetermined radio area, the predetermined radio communications services with respect to the second mobile terminal are also provided in the predetermined radio area.

According to a certain aspect of the invention, there is provided a mobile communication system, including: a detecting unit that detects whether or not a mobile terminal has been located in a specific area; and a radio communication controller that provides a predetermined radio communications service to the mobile terminal detected by the detecting unit as having been located in the specific area.

According to a certain aspect of the invention, there is provided a mobile communication method, including: detecting whether or not a first mobile terminal meets a predetermined requirement; providing, when the detecting unit detects the first mobile terminal as meeting the predetermined requirement, a predetermined radio communications service to the first mobile terminal; and providing, when the detecting detects the first mobile terminal as meeting the predetermined requirement, a predetermined radio communications service to a second mobile terminal, wherein the second mobile terminal is different from the first mobile terminal.

According to a certain aspect of the invention, there is provided a mobile communication apparatus, including: a detecting unit that detects whether or not a first mobile terminal meets a predetermined requirement; and a radio communication controller that provides, when the detecting unit detects the first mobile terminal as meeting the predetermined requirement, a predetermined radio communications service to the first mobile terminal, wherein when the detecting unit detects the first mobile terminal as meeting the predetermined requirement, the radio communications controller provides a predetermined radio communications service to a second mobile terminal different from the first mobile terminal.

According to a certain aspect of the invention, the mobile terminal receives a predetermined radio communications service from the communication apparatus when the mobile terminal has been located in a specific area.

It is to be understood that both the foregoing general description and the following detailed description are exemplary and explanatory and are not restrictive of the invention, as claimed.
Reference is made, by way of example only, to the accompanying drawings in which:

FIG. 1 illustrates an example of a configuration of a mobile communication system according to an embodiment.

FIG. 2 illustrates an example of a configuration of a mobile communication system according to an embodiment.

FIG. 3 illustrates an example of a sequence chart according to the mobile communication system.

FIG. 4 illustrates an example of a managing unit.

FIG. 5 illustrates an example of a history data base.

FIG. 6 illustrates an example of a sequence chart for providing service ccontent.

FIG. 7 illustrates an example of key information.

FIG. 8 illustrates an example of a flowchart of an operation of a communication apparatus.

FIG. 9 illustrates a first embodiment of a mobile communication system.

FIG. 10 illustrates a second embodiment of a mobile communication system.

FIG. 11 illustrates a third embodiment of a mobile communication system.

FIG. 12 illustrates a flowchart of a variation of an operation illustrated in FIG. 8.

FIG. 13 illustrates another flowchart of a variation of an operation illustrated in FIG. 8.

FIG. 14 illustrates a configuration of a variation of a mobile communication system illustrated in FIG. 1.

Embodiments for carrying out the present invention are described with reference to the figures.

In the certain embodiments, the provision of services is specifically made on a per-user basis to make the users feel special. This accordingly leads to marketing to acquire loyal customers, e.g., heavy users and regulars.

First Embodiment

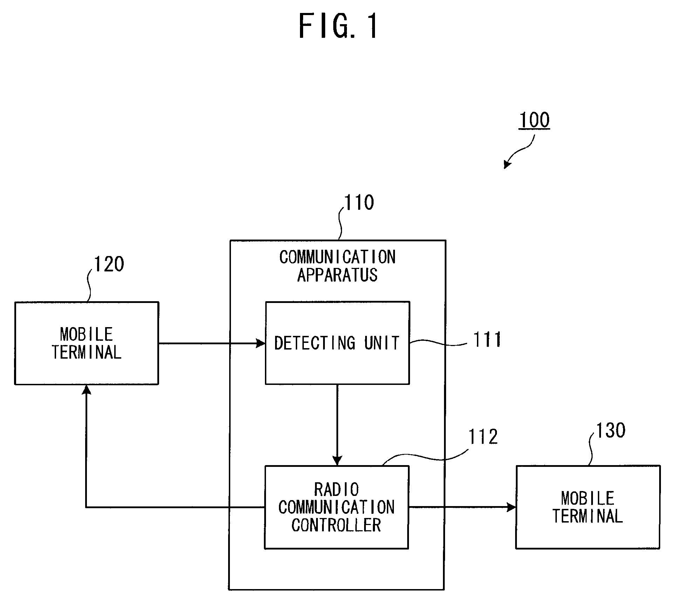

FIG. 1 is a block diagram illustrating the configuration of a mobile communication system of a first embodiment. As illustrated in FIG. 1, a mobile communication system 100 of the first embodiment is configured to include a communication apparatus 110, and mobile terminals 120 and 130. The communication apparatus 110 enables radio communications with the mobile terminals 120 and 130, respectively. The communication apparatus 110 is a network-side device for radio communications use, i.e., base station.

The communication apparatus 110 is configured to include a detecting unit 111, and a radio communication controller 112. The detecting unit 111 detects whether or not the mobile terminal 120 meets any predetermined requirement(s). The predetermined requirement(s), in certain embodiments, is(are) about the location of the mobile terminal, for example, whether or not the mobile terminal has previously entered a specific area. The predetermined requirements may be whether the mobile terminal has entered the specific area for a predetermined number of times or more. When detecting that the mobile terminal 120 meets such predetermined requirement(s), the detecting unit 111 forwards a detection signal to the radio communication controller 112. Additional and/or other requirement(s) may be added.

After receiving the detection signal from the detecting unit 111, the radio communication controller 112 starts providing predetermined radio communications service(s) to the mobile terminal 120. The predetermined radio communications service(s) provided as such by the radio communication controller 112 to the mobile terminal 120 include a distribution of service content, for example. The service content provides information about still image content or moving image content, for example.

After receiving the detection signal from the detecting unit 111, the radio communication controller 112 also provides predetermined radio communications service(s) to the mobile terminal 130. Here, the mobile terminal 130 is different from the mobile terminal 120. The predetermined radio communications service(s) provided by the radio communication controller 112 to the mobile terminal 130 as such are the same as the predetermined radio communications service(s) directed to the mobile terminal 120 by the radio communication controller 112.

For example, the radio communication controller 112 forwards key information to the mobile terminal 120 or 130. The key information is used to decrypt information about still or moving image content that has been encrypted before broadcasting. By providing the key information as such, the radio communication controller 112 provides the predetermined radio communications service(s) to the mobile terminal 120 or 130.

The mobile terminal 130 is correlated with the mobile terminal 120, and such a correlation has been established before the detecting unit 111 detects that the mobile terminal 120 is meeting the predetermined requirement(s). The correlation is about identification information of the mobile terminal 120 and that of the mobile terminal 130, and may be stored in advance in a memory (not shown) of the communication apparatus 110.

When the detecting unit 111 detects that the mobile terminal 120 meets the predetermined requirement(s), the radio communication controller 112 then makes a search of identification information correlated with the identification information of the mobile terminal 120. The radio communication controller 112 then provides the predetermined radio communications service(s) to the mobile terminal 130 indicated by the found identification information.

For example, the radio communication controller 112 forwards key information to the mobile terminal 120 or 130 to decrypt information about still or moving image content that has been completed with an encryption process before broadcasting. Using the key information provided as such, the mobile terminal 120 or 130 is provided with the predetermined radio communications service(s).

When the predetermined radio communications services for the mobile terminal 120 are made available in a predetermined radio area, the predetermined radio communications service(s) for the mobile terminal 130 may also be made available in the same predetermined radio area. If this is the case, the mobile terminal 130 is to be provided with the same predetermined radio communications service(s) as those provided to the mobile terminal 120 in the same predetermined radio area.

As such, with the mobile communication system 100 of the first embodiment, when the mobile terminal 120 meets any predetermined requirement(s), not only the mobile terminal 120 but also the mobile terminal 130 are provided with radio communications services. This may make users of the mobile terminals 120 and 130 feel special.

For example, providing the same radio communications services to both the mobile terminals 120 and 130 can make the user of the mobile terminal 130 feel still more special because a correlation is established between the mobile terminals 120 and 130 before the detecting unit 111 detects that the mobile terminal 120 is meeting the predetermined requirement(s). Such a correlation enables the provisioning of the radio communications services to the mobile terminal 130 when the mobile terminal 120 is detected by the detecting unit 111 as meeting the predetermined requirement(s).

The predetermined radio communications services provided by the radio communication controller 112 to the mobile terminal 120 provide service content such as still or moving images. Accordingly, this may add to the impression of exclusivity to the service content to be provided.

Further, transmitting the key information to the mobile terminal 120 or 130 may increase the impression of exclusivity of the service content to be provided. That is, the key information is used to decrypt information about encrypted still or moving image content, and thus any user not authorized for the provision of such service content may not decrypt such still or moving image content even if provided.

Furthermore, by also making available any predetermined radio communications services provided to the user of the mobile terminal 120 in a predetermined radio area to the user of the mobile terminal 130 when he or she is in the same radio area, the user visiting such a specific radio area may have the impression of exclusivity.

Furthermore, with the detecting unit 111 using predetermined requirement(s) about the location of mobile terminals, i.e., whether or not mobile terminals have entered a specific area before, any users of the mobile terminals having visited the specific area are entitled to be provided with the radio communications services. Alternatively, such predetermined requirement(s) for use by the detecting unit 111 may include whether mobile terminals have entered a specific area for a predetermined number of times or more. If this is the case, users who often visit the specific area are entitled to be provided with the radio communications service(s).

Second Embodiment

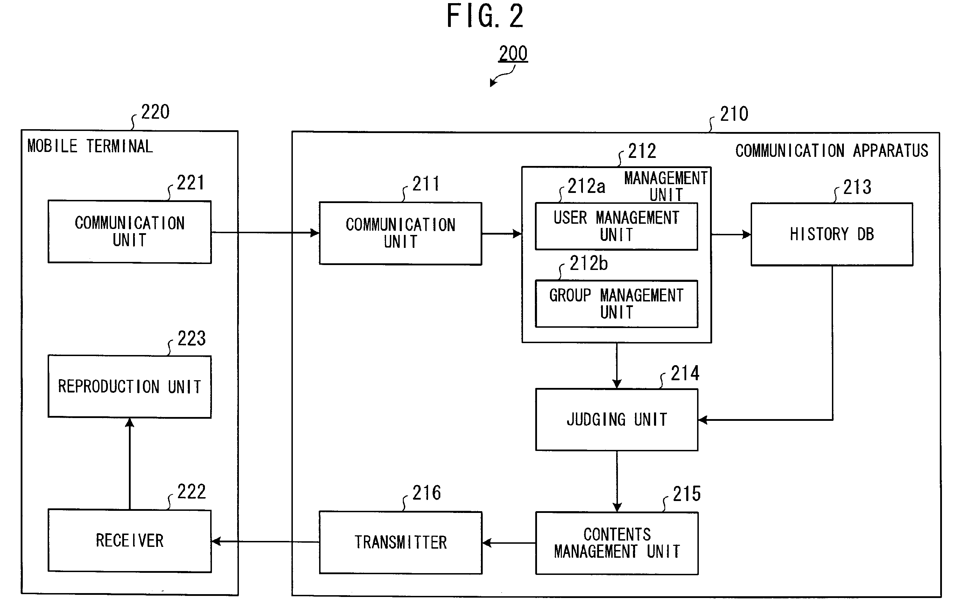

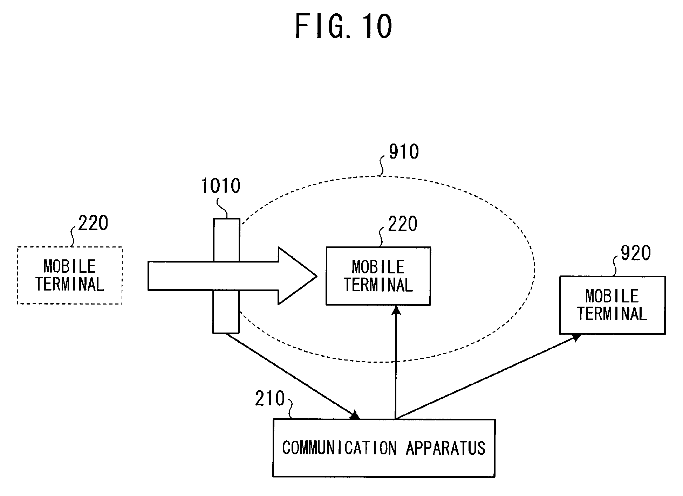

FIG. 2 is a block diagram illustrating the configuration of a mobile communication system of a second embodiment. As illustrated in FIG. 2, a mobile communication system 200 of the second embodiment is configured to include a communication apparatus 210 and a mobile terminal 220. The communication apparatus 210 and the mobile terminal 220 can communicate with each other through radio access. Alternatively, the communication apparatus 210 and the mobile terminal 220 may be able to communicate with each other via any other communication apparatus, e.g., gate 1010 of FIG. 10. The communication apparatus 210 is a network-side device for radio communications use.

The communication apparatus 210 is configured to include a communication unit 211, a management unit 212, a history database (history DB) 213, a judging unit 214, a content management unit 215, and a transmitter 216. The communication unit 211 is capable of performing mobile communications with the mobile terminal 220. The communication unit 211 is also capable of detecting whether or not the mobile terminal 220 has entered a specific area before, i.e., serves as a detecting unit.

When detecting that the mobile terminal 220 has entered a specific area, the communication unit 211 forwards a signal to the mobile terminal 220 for requesting history parameters. In response to such a request signal, the communication unit 211 is then provided with the history parameters coming from the mobile terminal 220. The communication unit 211 then forwards the history parameters provided by the mobile terminal 220 as such to the management unit 212. The history parameters include, for example, a user ID assigned to the mobile terminal 220, and an area ID indicating which area(s) the mobile terminal 220 has entered.

Based on the history parameters provided by the communication unit 211 as such, the management unit 212 manages the user IDs, group IDs, and in-area flags. More specifically, the management unit 212 is configured to include a user management unit 212a and a group management unit 212b. The user management unit 212a is for managing information about the user IDs, and the group management unit 212b is for managing information about the group IDs.

The user ID is identification information assigned to each mobile terminal including the mobile terminal 130. The group ID is for grouping the user IDs. The in-area flag has a one-to-one relationship with the user ID, and includes information about whether a mobile terminal with the corresponding user ID is located in a specific area where services are available.

The management unit 212 outputs, to the judging unit 214, the user ID found in the history parameters provided by the communication unit 211. Based on the history parameters provided by the communication unit 211 as such, the management unit 212 updates the in-area flag correlated with the user ID found therein. More specifically, when the area ID found in the history parameters is of a specific area where services are available, the management unit 212 sets "in-area" to the in-area flag corresponding to the user ID also found in the history parameters.

When the area ID found in the history parameters is not of a specific area where the services are available, the management unit 212 sets "not-in-area" to the in-area flag corresponding to the user ID found in the history parameters. The management unit 212 stores, in the history database 213, a history of the provision of services to the users or the groups, and history information for use as a basis for the provisioning of services. The history database 213 also stores therein history information about a detection result by the communication unit 211.

The judging unit 214 acquires, from the history database 213, the history information correlated with the user ID provided by the management unit 212, and determines whether or not the history information correlated with the user ID as such meets the predetermined requirement(s). When determining that the history information meets the predetermined requirement(s), the judging unit 214 forwards the user ID provided by the management unit 212 to the content management unit 215.

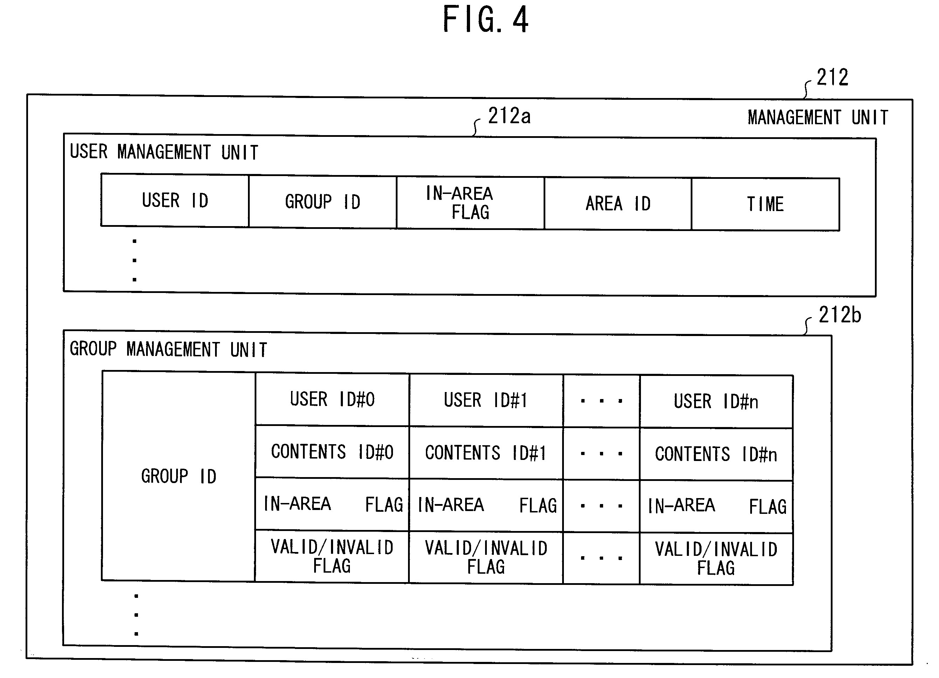

At this time, the judging unit 214 acquires group information stored by the group management unit 212b, and then extracts any user ID found in the same group as the user ID provided by the management unit 212. The judging unit 214 then acquires user information stored by the user management unit 212a, (e.g., refer to user information of FIG. 4), and from the user information, extracts any user ID whose in-area flag shows "in-area." The judging unit 214 then forwards the extracted user ID to the content management unit 215.

The content management unit 215 stores service content for provisioning to the mobile terminals. The content management unit 215 forwards, to the transmitter 216, the service content in storage together with the user ID provided by the judging unit 214. The content management unit 215 may encrypt such service content before transmission to the transmitter 216.

The transmitter 216 digitalizes the service content provided by the content management unit 215 before transmission to the mobile terminal 220. For transmission of the service content to the mobile terminal 220, a radio medium such as digital broadcasting, radio LAN (Local Area Network), or mobile communications may be used.

The mobile terminal 220 is configured to include a communication unit 221, a receiver 222, and a reproduction unit 223. The communication unit 221 is capable of performing mobile communications with the communication apparatus 210. When a signal for requesting the history parameters is provided by the communication apparatus 210, the communication unit 221 forwards, to the communication apparatus 210, the history parameters including the user ID of the mobile terminal 220 and the area ID.

The receiver 222 serves to receive the service content provided by radio from the communication apparatus 210. The receiver 222 then outputs the received service content to the reproduction unit 223. The reproduction unit 223 serves to reproduce the service content provided by the receiver 222 for viewing by the user. When the service content have been encrypted, the reproduction unit 223 first executes a decryption process to the service content before reproduction thereof.

In this example, described is the configuration of the communication apparatus including the communication unit 211, the management unit 212, the history database 213, the judging unit 214, the content management unit 215, and the transmitter 216. Alternatively, these components, i.e., the communication unit 211, the management unit 212, the history database 213, the judging unit 214, the content management unit 215, and the transmitter 216, may be separately provided among a plurality of communication apparatuses.

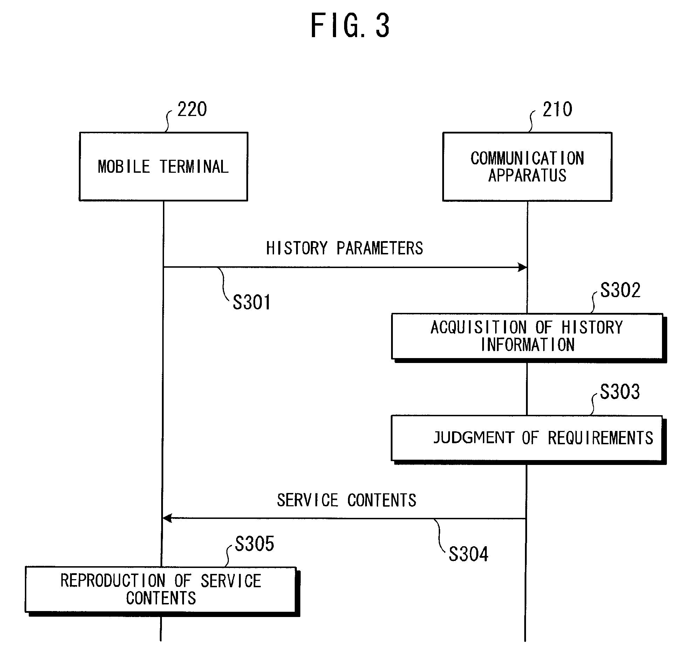

FIG. 3 is a sequence diagram illustrating an exemplary operation of the mobile communication system of FIG. 2. As illustrated in FIG. 3, the mobile terminal 220 transmits history parameters to the communication apparatus 210 (step S301). The communication apparatus 210 then acquires history information about the mobile terminal 220 (step S302). Next, the communication apparatus 210 determines (judges) whether or not the history information acquired in step S302 is meeting the requirement(s) (step S303).

Assumed here is that the history information is determined as meeting the requirements in step S303. With such an assumption, the communication apparatus 210 forwards service content to the mobile terminal 220 (step S304). The mobile terminal 220 then reproduces the service content provided in step S304 (step S305). This is the end of a series of processes.

FIG. 4 is a diagram specifically illustrating the management unit of FIG. 2. As illustrated in FIG. 4, the user management unit 212a of the management unit 212 stores user information, which includes a plurality of user IDs, each correlated with a group ID, an in-area flag, an area ID, and time. The group ID indicates to which group the user ID belongs. When the user ID does not belong to any group, the group ID corresponding to the user ID shows information indicating that the user ID does not belong to any group.

The in-area flag indicates whether or not a mobile terminal under the user ID is located in a specific area where radio communications services are available. The area ID indicates which specific area the mobile terminal under the user ID is located. The time indicates when the mobile terminal under the user ID has entered the specific area.

The group management unit 212b stores group information, which includes a plurality of group IDs, each correlated with a plurality of user IDs. A plurality of user IDs (#0 to #n) correlated with a group ID are those of a plurality of mobile terminals belonging to a group under the group ID. The user IDs are each correlated with a content ID (any of #0 to #n), an in-area flag, and a valid/invalid flag.

The content ID indicates which service content are available for the mobile terminal under the user ID correlated therewith. The in-area flag indicates which specific area the mobile terminal under the user ID correlated therewith is located. The valid/invalid flag indicates whether or not the service content under the content ID are valid.

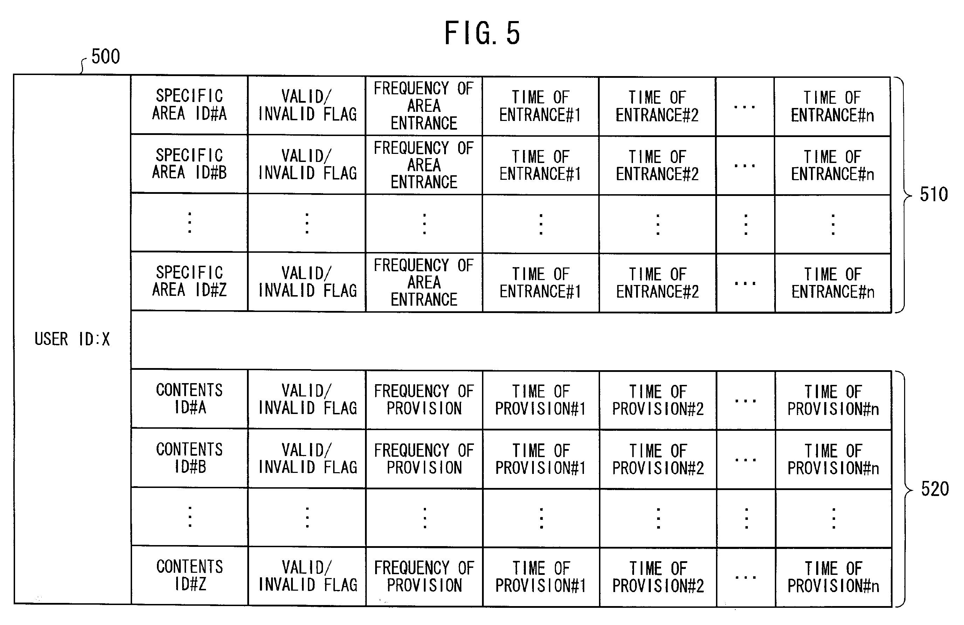

FIG. 5 is a diagram illustrating the history database of FIG. 2 with more details. The history database 213 stores a table such as table 500 for each of a plurality of user IDs. The table 500 of FIG. 5 is assumed as being correlated with the user ID of X. The table 500 includes elements of "activity history 510" and "service providing history 520."

The element of "activity history 510" includes a plurality of specific area IDs (#A to #Z), and the specific area IDs are each correlated with a valid/invalid flag, a frequency of entrance, and a time of entrance (#1, #2, to #n). The frequency of entrance in the element of "activity history 510" indicates the frequency of the mobile terminal under the user ID of X entering the specific area under the specific area ID correlated therewith.

The frequency of time indicates when the mobile terminal under the user ID of X has entered the specific area under the specific area ID correlated therewith. The time of entrance is stored in accordance with the value of the frequency of entrance (frequency of entrance = n). The valid/invalid flag in the element of "activity history 510" indicates whether or not the value as a result of counting the frequency of the mobile terminal entering the specific area, i.e., frequency of entrance, is valid.

For example, the valid/invalid flag in the element of "activity history 510" is set to "valid" in the initial state. When the mobile terminal enters a specific area, and when the value of the frequency of entrance is incremented by 1, the valid/invalid flag is changed to "invalid." When the valid/invalid flag indicates "invalid," the value of the frequency of entrance is not incremented even if the mobile terminal enters the specific area.

The valid/invalid flag is initialized to indicate "valid" on a fixed time basis. The fixed time is a day, for example. The valid/invalid flag may be so set to be initialized at 0:00 every day, for example. If this is the case, after entering a specific area, even if the mobile terminal remains therein for a long time or enters the same specific area again during the same day, the value of the frequency of entrance is not incremented.

It means if the mobile terminal enters the same specific area again on the following day or thereafter, the value of frequency of entrance will be incremented. In consideration thereof, the value of frequency of entrance has an upper limit, i.e., a predetermined frequency set on a fixed time basis. Assuming that when a fixed time is a day, and when the predetermined frequency is one, the upper limit of the frequency of entrance will be once a day. Note here that the fixed time is surely not restrictive to a day, and may be a predetermined number of days, a predetermined number of weeks, a predetermined number of months, and a predetermined number of years, for example.

The element of "service providing history 520" includes a plurality of content IDs (#A to #Z), a valid/invalid flag correlated with each content ID, a frequency of provision, and a time of provision (#1, #2, to #n). The valid/invalid flag in the element of "service providing history 520" indicates whether or not the provision of service content under the content ID correlated therewith is valid.

The frequency of provision in the element of "service providing history 520" indicates the frequency of the mobile terminal under the user ID of X being provided with the service content under the content ID correlated therewith. The time of provision indicates when the mobile terminal under the user ID of X is provided with the service content under the content ID correlated therewith. The time of provision is stored in accordance with the value of the frequency of provision (frequency of provision = n). The element of "service providing history 520" is updated by the content management unit 215 when the service content are provided to the mobile terminal, for example.

Note here that, for counting the frequency of entrance with an upper limit predetermined on a fixed time basis, described is how to initialize the valid/invalid flags in the element of "activity history 510" on a fixed time basis, but such a method is surely not the only option. Alternatively, when the mobile terminal enters the specific area, for example, the time when the mobile terminal has entered the specific area last time is acquired. When the difference between the current time and the acquired time is a predetermined interval, the frequency of entrance is newly counted for the mobile terminal.

On the other hand, when the difference between the current time and the acquired time is not the predetermined interval, the frequency of entrance is not newly counted for the mobile terminal. That is, when the difference between the current time and the acquired time is equal to or longer than a predetermined length of time, e.g., 24 hours, the frequency of entrance may be newly counted for the mobile terminal, and when such a difference is shorter than the predetermined length of time, the frequency of entrance may not be newly counted therefor, for example.

Alternatively, when there is some change between the current time and the acquired time in terms of a predetermined time unit, e.g., day, the frequency of entrance may be newly counted, and when there is no such change, the frequency of entrance may not be newly counted. Accordingly, this enables to count the frequency of entrance with an upper limit predetermined on a fixed time basis. Note here that the predetermined time unit is surely not restrictive to a day, and alternatively, may be a.m./p.m., week, month, year, and others.

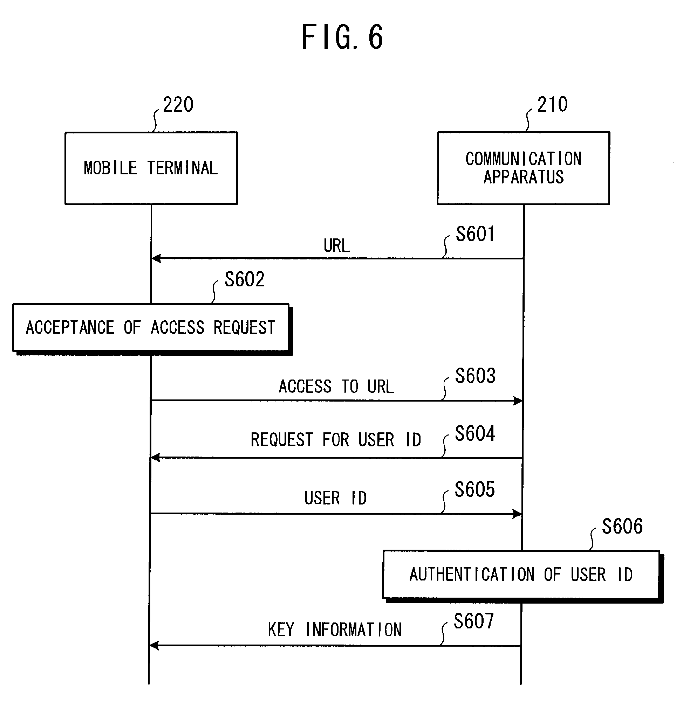

FIG. 6 is a sequence diagram illustrating an exemplary method of service content provisioning. In this example, assumed is that service content to be provided by the communication apparatus 210 to the mobile terminal 220 is information about encrypted still images or video . The communication apparatus 210 forwards, to the mobile terminal 220, a URL (Uniform Resource Locator) indicating the location thereof in the memory, storing key information for decryption use of such content information (step S601).

The URL to be transmitted by the communication apparatus 210 to the mobile terminal 220 in step S601 is stored in the memory of the communication apparatus 210 with a correlation with the user ID of the mobile terminal 220. The mobile terminal 220 then displays the URL provided in step S601 to the user, and accepts a request from the user for accessing the displayed URL (step S602).

In response to the access request accepted in step S602, the mobile terminal 220 accesses the URL provided in step S601 (step S603). The communication apparatus 210 forwards a request to the mobile terminal 220 asking for the user ID for notification thereof (step S604). In response to such a user ID request provided in step S604, the mobile terminal 220 forwards the user ID thereof to the communication apparatus 210 (step S605).

The communication apparatus 210 determines whether or not to authenticate the user ID provided in step S605 (step S606). In step S606, the factor in such an authentication is whether or not the user ID provided in step S605 is stored in the memory of the communication apparatus 210 with a correlation with the URL provided in step S601.

The communication apparatus 210 forwards key information to the mobile terminal 220 for decryption of service content (step S607). With such a procedure, the communication apparatus 210 forwards the key information to the mobile terminal 220 for decryption of the content information. The mobile terminal 220 receives the content information for broadcasting, and decrypts the content information using the key information provided by the communication apparatus 210, thereby being provided with the service content.

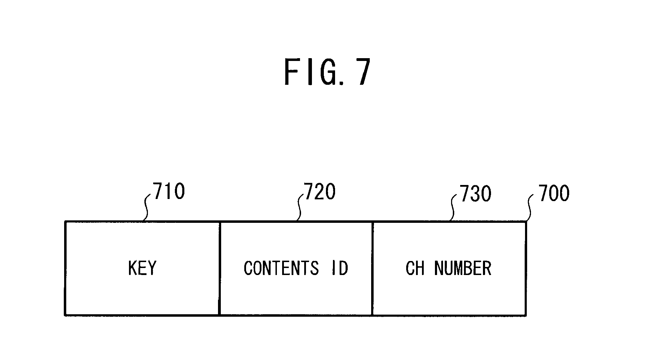

FIG. 7 is a diagram illustrating an example of the key information of FIG. 6. As shown in FIG. 7, key information 700 to be transmitted from the communication apparatus 210 to the mobile terminal 220 in step S607 of FIG. 6 includes a key 710, a content ID 720, and a CH number 730. The key 710 takes a value for control of an algorithm used to decrypt any encrypted content.

The content ID 720 is identification information of the content information. The CH number 730 is identification information about which channel the content information is to be broadcast. The mobile terminal 220 receives the content information indicated by the content ID 720 from the channel under the CH number 730, and decrypts the received content information using the key 710. As such, the mobile terminal 220 can be provided with the service content from the communications apparatus 210.

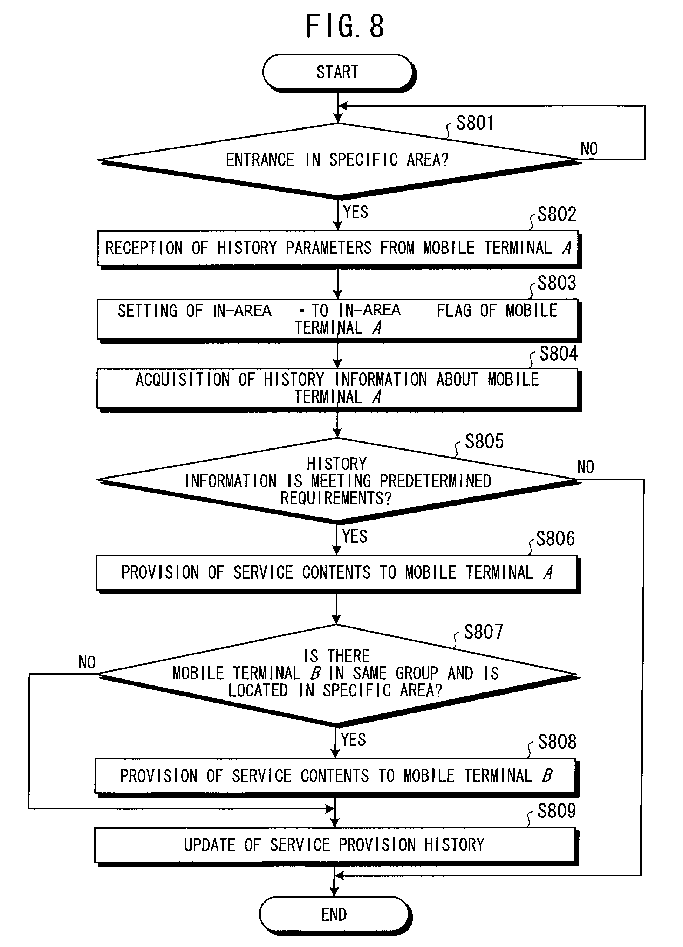

FIG. 8 is a flowchart of an exemplary operation of the communications apparatus of FIG. 2. As shown in FIG. 8, the communication unit 211 determines whether or not a mobile terminal has entered a specific area before (step S801), and when the determination result is No, the communication unit 211 waits until the mobile terminal enters the specific area (step S801: loop of NO). The mobile terminal being a detection target in step S801 about the entrance in a specific area is the one signed up for the service content to be provided by the communication apparatus 210, e.g., the mobile terminal 220 (hereinafter, referred to as "mobile terminal A."

In step S801, when the mobile terminal A enters the specific area (step S801: Yes), the communication unit 211 is provided with history parameters from the mobile terminal A (step S802). Based on the history parameters provided in step S802 as such, the management unit 212 sets "in-area" to the "in-area" flag of the mobile terminal A (step S803).

The management unit 212 acquires history information about the mobile terminal A from the history database 213 (step S804). The history information acquired in step S804 is determined whether or not to meet any predetermined requirements (step S805). When the history information is determined as not meeting the predetermined requirements (step S805: No), this is the end of a series of processes.

When the history information is determined as meeting the predetermined requirements in step S805 (step S805: Yes), the transmitter 216 provides the service content to the mobile terminal A (step S806). The management unit 212 refers to the user management unit 212a and the group management unit 212b to determine whether there is any other mobile terminal in the same group as the mobile terminal A and located in the specific area (step S807). Such any other mobile terminal is referred to as mobile terminal B.

In step S807, when there is no such mobile terminal B (step S807: No), the procedure goes to step S809 to continue process execution. When there is such a mobile terminal B (step S807: Yes), the transmitter 216 provides the service content to the mobile terminal B (step S808). The management unit 212 updates the service provision history (refer to service providing history 520 of FIG. 5) of the mobile terminal A (step S809), and this is the end of a series of processes.

When the mobile terminal B is provided with the service content in step S808, the service provision history of the mobile terminal B is also updated in step S809. Herein, described is the case of providing the service content to the mobile terminal A at the time point when the mobile terminal A is determined as meeting the predetermined requirements. Alternatively, when the mobile terminal A is determined as meeting the predetermined requirements, such a notification may be made to the mobile terminal A.

When a request for the service content is issued by the mobile terminal A to the communication apparatus 210, the communication apparatus 210 may provide the service content to the mobile terminal A. If this is the case, any service content not requested by the user of the mobile terminal A are prevented from being automatically provided to the mobile terminal A.

As such, with the mobile communication system 200 of the second embodiment, the effects similar to those achieved by the mobile communication system 100 of the first embodiment can be achieved. For such effects, in the second embodiment, the predetermined requirements for use by the detecting unit 111 are the frequency of a mobile terminal having entered a specific area, i.e., the frequency of a predetermined value or more, and such a frequency of the mobile terminal having been entered the specific area is counted with an upper limit of a value predetermined on a fixed time basis.

As such, even if the mobile terminal remains in the specific area for a long time, even if the mobile terminal is registered in position for a plurality of times, or even if the mobile terminal enters the same specific area for a plurality of times in a specific period of time, the actual frequency of the user having visited the specific area can be counted appropriately.

First Example

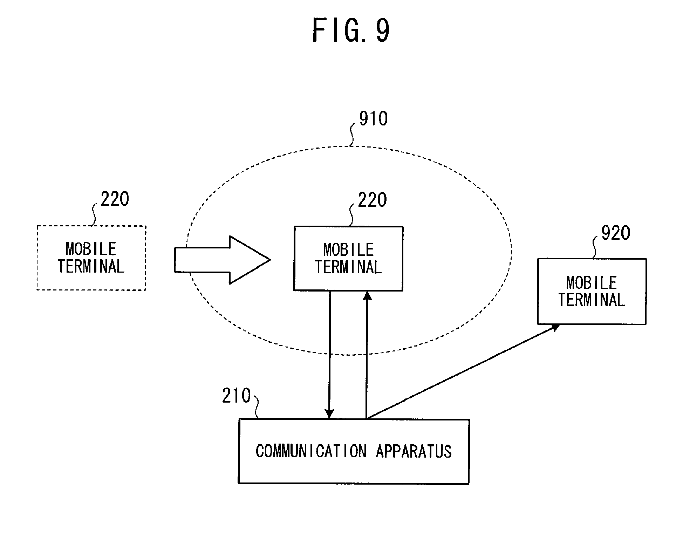

FIG. 9 is a diagram illustrating a first example of the mobile communication system. The communication apparatus 210 is assumed as being a base station forming a mobile communications network with the mobile terminal 220. The mobile terminal 220 asks for a position registration thereof for maintaining the radio communications network with the communication apparatus 210. The communication apparatus 210 determines whether or not the mobile terminal 220 is located in a specific area 901 during the position registration for the mobile terminal 220, thereby detecting whether or not the mobile terminal 220 has entered the specific area 910 before.

When detecting that the mobile terminal 220 has entered the specific area 910, the communication apparatus 210 determines whether or not the mobile terminal 220 is meeting any predetermined requirements. When determining that the mobile terminal 220 is meeting the predetermined requirements, the communication apparatus 210 provides radio communications services to the mobile terminal 220. Assuming here is that a mobile terminal 920 different from the mobile terminal 220 and has a user ID belonging to the group same as the user ID of the mobile terminal 220 in the group management unit 212b of the communication apparatus 210.

When the mobile terminal 220 is determined as meeting the predetermined requirements, the communication apparatus 210 also provides radio communications services to the mobile terminal 920. When the mobile terminal 920 is located in the specific area 910, the communication apparatus 210 may provide the radio communications services to the mobile terminal 920. On the other hand, when the mobile terminal 920 is not located in the specific area 910, the communication apparatus 210 may not provide the radio communications services to the mobile terminal 920.

This makes the user of the mobile terminal 920 entitled to the provision of the radio communication apparatus the same as those for the user of the mobile terminal 220 by visiting the specific area 910 together with the user of the mobile terminal 220. Accordingly, this offers the impression of exclusivity to the user of the mobile terminal 220. Alternatively, the radio communications services to be provided to the mobile terminal 920 may be different from those to be provided to the mobile terminal 220 so that the user of the mobile terminal 220 may be treated differently from the user of the mobile terminal 920. Accordingly, this gives the impression of exclusivity to the user of the mobile terminal 220 fulfilling the predetermined requirements.

Alternatively, when the mobile terminal 920 is not located in the specific area 910, the communication apparatus 210 may provide the radio communications services thereto. If this is the case, by the mobile terminal 220 meeting the predetermined requirements, the user of the mobile terminal 920 may be entitled to the provisioning of the radio communications service same as those for the user of the mobile terminal 220. Accordingly, this gives the impression of exclusivity to the user of the mobile terminal 220.

Second Example

FIG. 10 is a diagram illustrating a second example of the mobile communication system. A gate 1010 is provided at a position where a person entering the specific area 910 passes through. For example, the gate 1010 is provided in the vicinity of an entrance to the specific area 910 such as theme park. The gate 1010 is capable of performing communications with the communication apparatus 210.

When the mobile terminal 220 passes through the gate 1010, the gate 1010 reads identification information of the mobile terminal 220, e.g., user ID, and forwards the identification information read as such to the communication apparatus 210. By receiving the identification information of the mobile terminal 220 from the gate 1010, the communication apparatus 210 detects that the mobile terminal 220 has entered the specific area. The remaining operation of the communication apparatus 210 is the same as that in the first embodiment (refer to FIG. 9), and thus is not described again.

Third Example

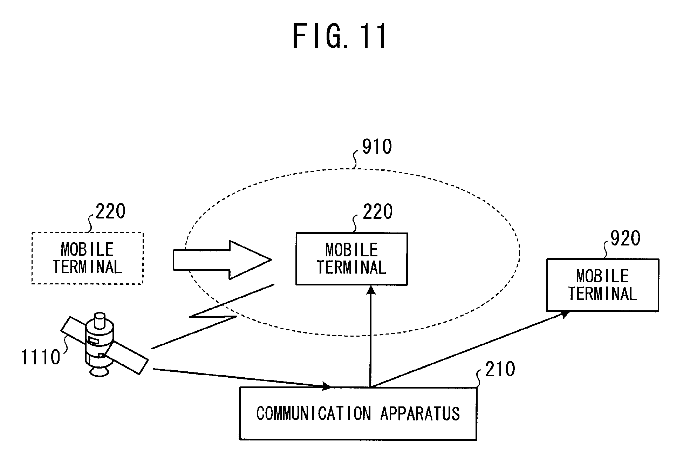

FIG. 11 is a diagram illustrating a third example of the mobile communication system. The mobile terminal 220 may be provided with a capability of a location system (either satellite or ground-based), such as the Global Positioning System (GPS). A GPS satellite 1110, for example, acquires the position of the mobile terminal 220, and provides information about the position acquired as such to the communication apparatus 210.

The memory of the communication apparatus 210 therein stores information about the position of the specific area 910. The communication apparatus 210 determines whether or not the position information provided by the GPS satellite 1110 is included in the position information stored in the memory of the communication apparatus 210, thereby detecting whether or not the mobile terminal 220 has entered the specific area 910 before.

Alternatively, the mobile terminal 220 may acquire the position information about the mobile terminal 220 by the GPS capability, and forwards the position information acquired as such to the communication apparatus 210. By using the position information about the mobile terminal 220 acquired by the GPS capability, the entrance of the mobile terminal 220 into the specific area 910 can be detected with good accuracy. The remaining operation of the communication apparatus 210 is the same as that of the first example (refer to FIG. 9), and thus is not described again.

First Modified Example

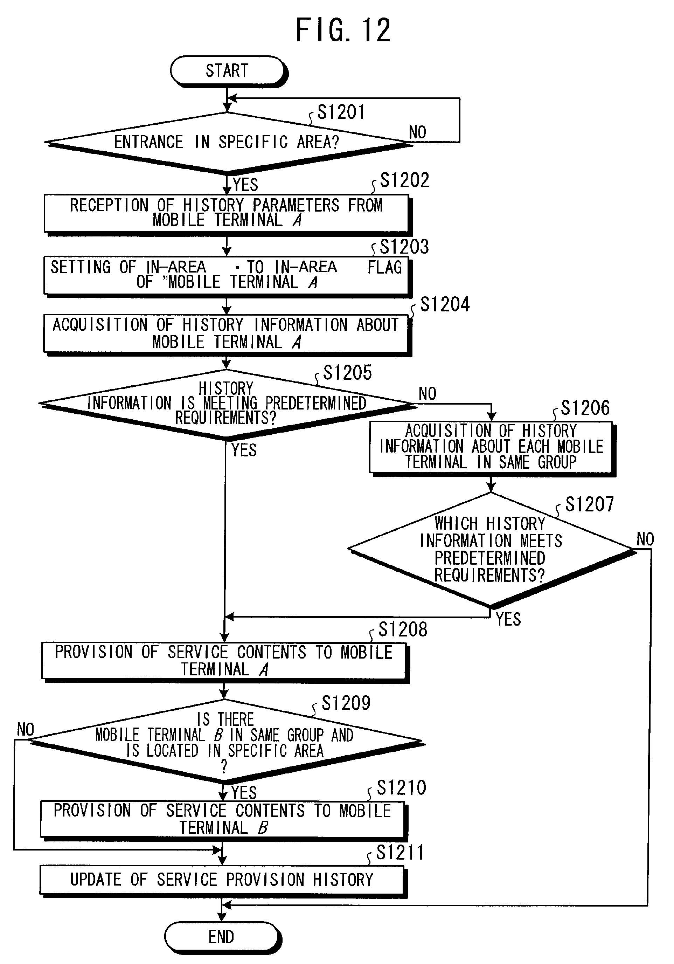

FIG. 12 is a flowchart of a first modified example of the operation of FIG. 8. In FIG. 12, steps S1201 to S1205 are the same as steps S801 to S805 of FIG. 8, and thus are not described again. In step S1205, when the history information does not meet the predetermined requirements (step S1205: No), the management unit 212 acquires the history information about each of the mobile terminals found in the group same as the mobile terminal A from the history database 213 (step S1206). The judging unit 214 determines which of the history information acquired in step S1206 meets the predetermined requirements (step S1207).

In step S1207, when none of the history information meets the predetermined requirements (step S1207: No), this is the end of a series of processes. When any of the history information meets the predetermined requirements (step S1207: Yes), the procedure goes to step S1208 to continue the execution of the process. Herein, steps S1208 to S1211 are the same as steps S806 to S809 of FIG. 8, and thus are not described again.

As such, when the mobile terminal A does not meet the predetermined requirements, it may be possible to detect whether or not any other mobile terminal correlated in advance with the mobile terminal A meets the predetermined requirements. If this is the case, when such a mobile terminal correlated in advance with the mobile terminal A is detected as meeting the predetermined requirements, the mobile terminal A is provided with the radio communications services. Accordingly, this gives the impression of exclusivity to the user group including the mobile terminals correlated with one another.

Second Modified Example

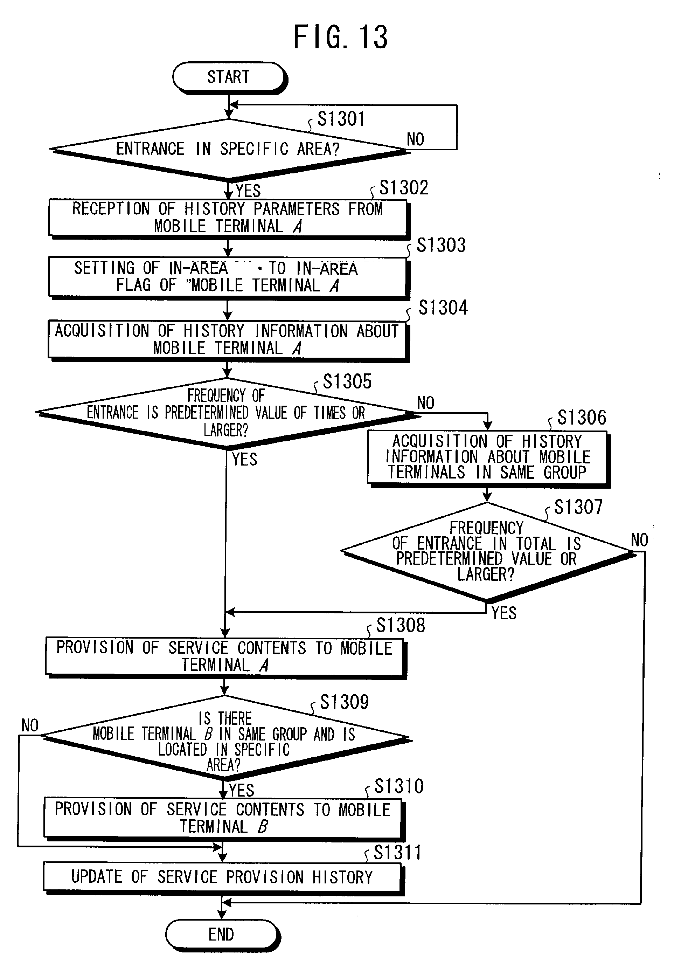

FIG. 13 is a flowchart of a second modified example of the operation of FIG. 8. In this example, it is assumed that the predetermined requirements are the frequency of a mobile terminal having entered a specific area, i.e., the frequency of a predetermined value or more. In FIG. 13, steps S1301 to S1304 are the same as steps S801 to S804 of FIG. 8, and thus are not described again.

After step S1304, based on the history information acquired in step S1304, the judging unit 214 determines whether or not the mobile terminal A has entered the specific area for a predetermined number of times or more (step S1305). When such a frequency of entrance is equal to or more than a predetermined value (step S1305: Yes), the procedure goes to step S1308 to continue the execution of the process.

When the frequency of entrance is not equal to or larger than the predetermined value in step S1305 (step S1305: No), the judging unit 214 acquires history information about any other mobile terminal(s) found in the group same as the mobile terminal A from the history database 213 (step S1306). The judging unit 214 then determines, based on the history information acquired in step S1306, whether or not the mobile terminal A and such other mobile terminal(s) have entered the specific area for a predetermined number of times or more in total (step S1307).

In step S1307, when such a total frequency of entering the specific area is not equal to or larger than the predetermined value (step S1307: No), this is the end of a series of processes. When the total frequency of entering the specific area is equal to or larger than the predetermined value (step S1307: Yes), the procedure goes to step S1308 to continue the execution of the process. Steps S1308 to S1311 are the same as steps S806 to S809 of FIG. 8, and thus are not described again.

As such, when the mobile terminal A is not meeting the predetermined requirements, a detection may be made to find whether or not the mobile terminal A and such other mobile terminal(s) have entered the specific area for a predetermined number of times or more in total. If this is the case, when the resulting total value is equal to or larger than the predetermined value, the mobile terminal A is provided with the radio communications services. Accordingly, this enables an impression of exclusivity to the user group including the mobile terminals correlated with one another.

Third Modified Example

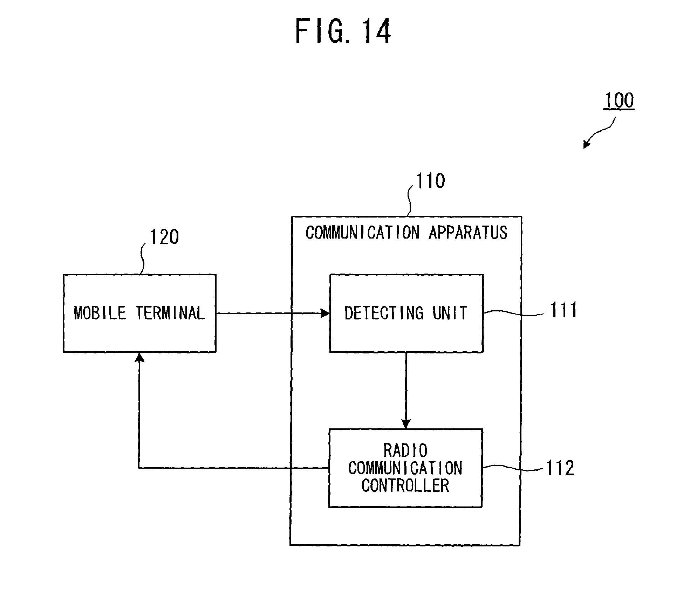

FIG. 14 is a block diagram illustrating a third modified example of the mobile communication system of FIG. 1. In FIG. 14, any configuration component that is the same as that of FIG. 1 is provided with the same reference numeral, and is not described again. By referring to FIG. 1, described is the configuration of providing, when a detection signal comes from the detecting unit 111, the radio communications services by the radio communication controller 112 to the mobile terminal 130 (refer to FIG. 1). Alternatively, no radio communications services may be provided to the mobile terminal 130.

In this case, for example, the predetermined requirements for use by the detecting unit 111 may be whether or not the mobile terminal 120 has been located in a specific area. As such, if the user of the mobile terminal 120 has previously visited the specific area, he or she is entitled to the provision of radio services by the radio communication controller 112.

Accordingly, this enables the impression of exclusivity to the user of the mobile terminal 120. The mobile communication system of this example is the same as the mobile communication system 100 of FIG. 1 except that the mobile terminal 130 is not provided with the radio communications services when the mobile terminal 120 meets the predetermined requirements.

As described above, with the mobile communication system and method, the communication apparatus, and the mobile terminal of certain embodiments, when a first mobile terminal meets any predetermined requirements, radio communications services are provided not only to the first mobile terminal but also to another mobile terminal, i.e., second mobile terminal. This accordingly enables to give the more impression of exclusivity to the users of the first and second mobile terminals, thereby being able to provide services stimulating the users' interests.

Moreover, with the mobile communication system and method, the communication apparatus, and the mobile terminal of other embodiments (refer to FIG. 14), radio communications services are provided to any mobile terminal detected as previously having been located in a specific area. Preferably, radio communications services are provided to any mobile terminal having been located in the specific area for a predetermined number of times or more. This accordingly enables to give the more impression of exclusivity to the user of the mobile terminals, thereby being able to provide services stimulating the users' interests.

Note here that, in the embodiments, the examples, and the modified examples described above, the radio communications services are exemplified as being the provision of service content, but the radio communications services are surely not restrictive to the provision of service content. For example, the specific area may be a theme park, and the radio communications services may be the provisioning of discount tickets to the theme park. Alternatively, the radio communications services may be an approval to take part in any specific community on the network, e.g., community of users of mobile terminals located in the specific area.

Alternatively, such a specific area may be a plurality of areas, and the predetermined requirements may be whether or not a mobile terminal has been located in any of the specific areas. In addition, the predetermined requirements may be about the frequency of the mobile terminal having been located in any of the specific areas, i.e., the frequency of a predetermined number or more.

Accordingly, this may enable the impression of exclusivity to any users having visited any of such specific areas. For example, if the specific area is a plurality of theme parks under the management of a corporate family, for example, the services can be provided with better flexibility, e.g., users visiting such theme parks under the management of a corporate family can be treated preferentially.

With a plurality of specific areas set as such, the predetermined requirements may be about the number of the specific areas a mobile terminal has been located before, i.e., the number of a predetermined value or larger. If this is the case, users having frequently visited such specific areas may have more impression of exclusivity. If the specific area is a plurality of theme parks under the management of a corporate family, for example, the services can be provided with better flexibility, e.g., users often visiting such theme parks under the management of a corporate family can be treated preferentially.

Alternatively, a specific area being a target of the requirements about the location of a mobile terminal is not necessarily the same as a specific area where the mobile terminal is provided with radio communications services. For example, when detecting that a mobile terminal has entered a first specific area, the communication apparatus may determine whether or not the mobile terminal has previously been located in a second specific area. When determining that the second mobile terminal has been located in the second specific area, the communication apparatus then provides radio communications services to the mobile terminal.

According to some embodiments described above, services stimulating users' interests can be favorably provided.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the scope of the claims.

## Claims

1. A mobile communication system, comprising:
a detecting unit that is arranged to detect whether or not a first mobile terminal meets a predetermined requirement; and
a radio communication controller that is arranged to provide, when the detecting unit detects the first mobile terminal as meeting the predetermined requirement, a predetermined radio communications service to the first mobile terminal, wherein when the detecting unit detects the first mobile terminal as meeting the predetermined requirements, the radio communications controller is arranged to provide a predetermined radio communications service to a second mobile terminal, the second mobile terminal being different from the first mobile terminal.

2. The mobile communication system according to claim 1, wherein
the radio communications service provided to the second mobile terminal is the same as the radio communications service provided to the first mobile terminal.

3. The mobile communication system according to claim 1 or 2, wherein
the second mobile terminal is correlated with the first mobile terminal before the detecting unit detects the first mobile terminal as meeting the predetermined requirement.

4. The mobile communication system according to claim 1, 2, or 3, wherein
the predetermined radio communications service provided to the first mobile terminal, or the radio communications service provided to the second mobile terminal is a distribution of information about still or moving image content.

5. The mobile communication system according to any preceding claim, wherein
the radio communication controller provides the predetermined radio communications service to the first or second mobile terminal by transmitting key information to the first or second mobile terminal for use to decrypt information about encrypted content.

6. The mobile communication system according to any preceding claim, wherein
when the predetermined radio communications service with respect to the first mobile terminal is applied in a predetermined radio area, the predetermined radio communications service with respect to the second mobile terminal is also provided in the predetermined radio area.

7. The mobile communication system according to any preceding claim, comprising: the first and second mobile terminals.

8. The mobile communication system according to any preceding claim, wherein
the predetermined requirement is whether or not the first mobile terminal has been located in a specific area.

9. The mobile communication system according to claim 8, wherein
the predetermined requirement is whether or not a frequency of the first mobile terminal having been located in the specific area is a predetermined value or larger, for example with the frequency being counted with an upper limit of the predetermined value on a fixed time basis.

10. The mobile communication system according to claim 8 or 9, wherein
the specific area is a plurality of specific areas, and the predetermined requirement is one of:
whether or not the first mobile terminal has been located in any of the plurality of specific areas; and
whether the number of the specific areas the first mobile terminal has been located before is the predetermined value or larger.

11. The mobile communication system according to claim 8, 9, or 10, comprising:
a detecting unit that is arranged to detect whether or not the first mobile terminal is located in the specific area; and
a history database that is arranged to store history information about a detection result of the detecting unit, wherein
based on the history information stored in the history database, the detecting unit detects whether or not the first mobile terminal has been located in the specific area.

12. The mobile communication system according to any of claims 8 to 11, wherein
when the detecting unit detects the first mobile terminal as not meeting the predetermined requirement, the detecting unit detects that any other mobile terminal correlated in advance with the first mobile terminal is meeting the predetermined requirement.

13. The mobile communication system according to any of claims 8 to 12, wherein
the predetermined requirement is whether a frequency of the first mobile terminal having been located in the specific area is a predetermined value or larger, and
when the detecting unit detects the first mobile terminal as not meeting the predetermined requirement, the detecting unit detects whether or not the first mobile terminal and another mobile terminal correlated in advance with the first mobile terminal have been located in the specific area, in total, for a predetermined number of times or larger.

14. A mobile communication system, comprising:
a detecting unit that is arranged to detect whether or not a mobile terminal has been located in a specific area; and
a radio communication controller that is arranged to provide a predetermined radio communications service to the mobile terminal detected by the detecting unit as having been located in the specific area.

15. A mobile communication method, comprising:
detecting whether or not a first mobile terminal meets a predetermined requirement;
providing, when the detecting detects the first mobile terminal as meeting the predetermined requirement, a predetermined radio communications service to the first mobile terminal; and
providing, when the detecting detects the first mobile terminal as meeting the predetermined requirement, a predetermined radio communications service to a second mobile terminal, the second mobile terminal being different from the first mobile terminal.
